# EUROPEAN PATENT APPLICATION

(11) **EP 1 628 195 A1**
(43) Date of publication of application: **22.02.2006**
(21) Application number: 04019736.0
(22) Date of filing: 19.08.2004
(51) Int. Cl.: G06F 3/023

(54) **Handheld electronic device**

(71) Applicant: High Tech Computer Corp., Taoyuan (TW)
(72) Inventor: Wang, John C., Tao Yuan (TW); Tun, Yun-Long, Tao Yuan (TW)
(74) Representative: Becker Kurig Straus

(57) **Abstract**

A keyboard with multifunction keys on a panel of a handheld electronic device is provided. The multifunction keys are set in a transverse, tilted or vertical direction and used for typewriting. Each multifunction key has a linear configuration and comprises three symbols such that depressing a central part of the key inputs a first symbol and depressing one end of the key inputs a second symbol while depressing the other end of the key inputs a third symbol. Therefore, the number of keys as well as the total area occupied by the keys on the handheld electronic device can be reduced.

## Description

### BACKGROUND OF THE INVENTION

### Field of the Invention

The present invention relates to a handheld electronic device. More particularly, the present invention relates to a keyboard structure with multifunction keys for a handheld electronic device.

### Description of the Related Art

A handheld electronic device is a small and portable electronic device such as a mobile phone, a pocket PC or a personal digital assistant (PDA). Because a handheld electronic device can be used to carry out wireless and network communication, it has currently become one of the most convenient, efficient and high-tech means of communication. However, a handheld electronic device normally has a size not bigger than a palm, and a display screen thereof occupies a large area. Hence, the number of keys for inputting information to the handheld electronic device is limited. In other words, it is quite difficult to equip a handheld electronic device with a QWERTY keyboard. Consequently, it is in the present practice to connect the handheld electronic device with an external QWERTY keyboard when the user intends to proceed with text input.

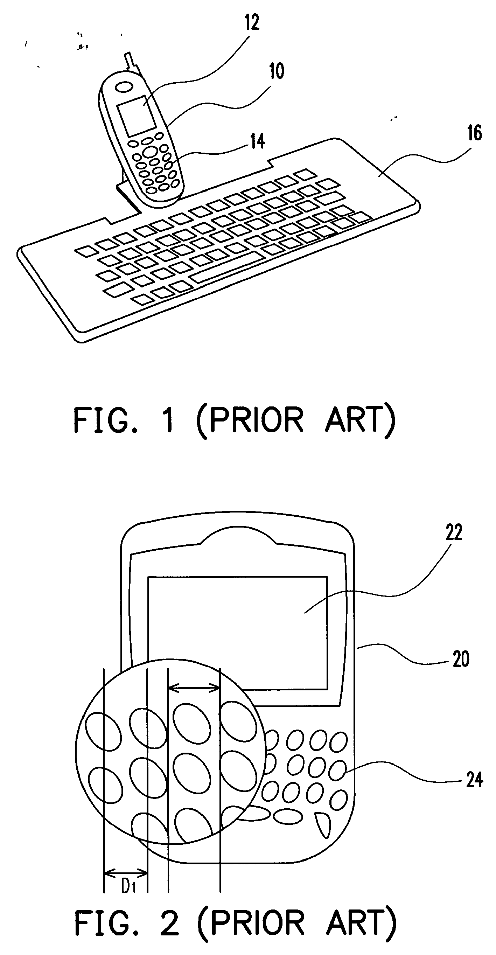

Figs. 1 through 3 are photographs of three conventional types of mobile device/keyboard assemblies. First, as shown in Fig. 1, the display screen 12 of the mobile phone 10 occupies an area between 1/3 to 1/4 of a front panel of the mobile phone 10. An array of keys 14 is set up on the remaining area of the panel. The keys 14 are set up on the panel below the display screen 12. The keys 14 are mainly used for number input for telephone dialing. They are not convenient for word input, which is required in editing a text message. To facilitate the word input, a large-size external keyboard 16 is often connected to the mobile phone 10. However, carrying a bulky keyboard around for connecting with mobile phone is not convenient.

Fig. 2 shows a handheld electronic device 20 (a wireless personal digital assistant (PDA)) having an integral QWERTY keyboard 24 and a display screen 22 above the keyboard 24. An interspace D1 is defined between two neighboring columns of keys of the QWERTY keyboard 24. In order to enable a user of the device 20 to correctly depress an intended key, the interspace D1 should be no smaller than a predetermined distance, which results in that the device 20 has an increased width. However, with a larger width, the user is difficult to grip the handheld electronic device 20 with his (her) palm. Furthermore, such an increased width is contrary to the compact and portable trend required for the handheld electronic device, and is inconvenient for the user to carry with.

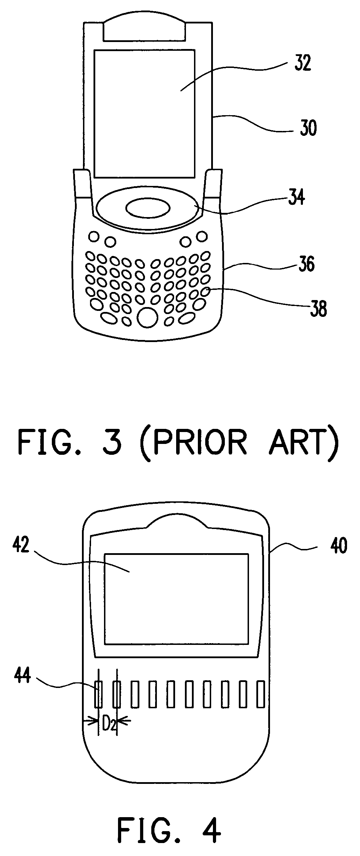

Fig. 3 shows a conventional personal digital assistant (PDA) 30 with a display screen 32 that occupies ¾ or more of a panel area of the device 30. There are several application keys 34 on the panel. To enter words/numbers/symbols into the handheld electronic device, a user thereof must use a stylus (not shown) to touch a virtual keyboard shown on the display screen 32. Such an operation cannot have a high input speed. Alternatively, to speed up the input process, an externally connected miniaturized keyboard 36 has to be used. The keyboard 36 has a plurality of keys 38 thereon, which form a QWERTY keyboard. To carry the miniaturized keyboard 36 with the device 30 is not convenient for the user. Furthermore, the assembled device 30 with the keyboard 36 is too bulk for the user to conveniently operate. Finally, the electrical connection between the device 30 and the keyboard 36 may fail after repeated connections/separations of the keyboard 36 with/from the device 30.

To resolve the above-mentioned problems of the conventional devices, a data input device with an array of multifunction keys is disclosed in U.S. Patent No. 5,861,823. Each multifunction key has an oval shape (Fig. 2), a triangular shape (Fig. 3) or a rectangular shape (Fig. 4). The central location of each oval, triangular or rectangular key represents a number symbol and the two ends of the oval-shape key, the three corner areas of the triangular key or the four corner areas of the rectangular key represent a number of alphabet symbols or computational symbols. Although the input device disclosed a multifunction key design capable of inputting at least three symbols per key, a mode key (for example, the mode key 24 in Fig. 2) must be pressed to switch the input symbol prior to inputting different symbols through the same multifunction key. In other words, the keyboard is still not as convenient to use as a conventional typewriting keyboard. Furthermore, the alphabet symbols are not set in positions that correspond with the familiar QWERTY keyboard. Thus, a user can hardly input alphabetic symbols without looking at the keyboard.

A miniature text editor having twelve multifunction keys arranged for typewriting is disclosed in U.S. Patent No. 5,841,374. Each multifunction key has 7 input modes capable of outputting alphabet symbols, numeric symbols, computational symbols and other functional symbols so that there are 84 key states altogether. Although providing multifunctional keys can reduce the number of keys, the space between two neighboring alphabet symbols in the middle row (for example, A, S, D and F) is too large while the upper or lower row (for example, Q, 1 and !) is too small. Therefore, if the accuracy of finger movement and the pressure exerted by each finger deviates just by a little, the probability of touching other symbols on the same key is increased. That means, it is very difficult for a user to input data through the text editor in a normal typewriting manner.

In U.S. Patent Publication No. 2001/0006587, a keyboard structure with multifunction keys set up in a typewriting format is disclosed. Each multifunction key has three alphabet symbols located at the three corners of a triangle. Although using multifunction keys can reduce the total number of keys, the alphabet symbol (for example, S) in the middle row and another alphabet symbol (for example, W, E) in an adjacent upper row are set too close together. Thus, if there is any inaccuracy in the movement of the fingers or any minor variation in finger pressure, the probability of touching other symbols on the same key is very likely. That means, it is difficult to input data through the keyboard in a normal typewriting manner.

### SUMMARY OF THE INVENTION

Accordingly, an objective of the present invention is to provide a keyboard structure with multifunction keys thereon for reducing the number of keys and the area occupied by the keys.

A second objective of the present invention is to provide a keyboard structure with multifunction keys set for typewriting such that each key can be inputted with three symbols. Furthermore, all neighboring pairs of symbols have an equal space therebetween so that accurate input can be ensured.

A third objective of the present invention is to provide a keyboard with multifunction keys that provide virtual key modes to enhance the versatility of the keyboard.

A fourth objective of the present invention is to provide a handheld electronic device with a numeric keypad and an alphabetical keyboard consisted of multifunction keys. The numeric symbols for the numeric keypads are arranged in a tilted manner, relative to the orientation of the alphabetical keyboard, to thereby facilitate reading of the numbers from two mutually perpendicular directions (note: the horizontal and the vertical direction).

A fifth objective of the present invention is to provide a keyboard with multifunction keys; the multifunction keys are tilted to provide a larger space between neighboring keys so that the probability of erroneous depressing of the keys is reduced.

A sixth objective of the present invention is to provide multifunction keys that facilitate the input of special symbols.

A seventh objective of the present invention is to provide a keyboard with multifunction keys that has a light source capable of selectively illuminating different symbols on the keyboard.

To achieve these and other advantages and in accordance with the purpose of the invention, as embodied and broadly described herein, the invention provides a multifunction key. A plurality of the multifunction keys forms a typewriting keyboard. The multifunction key comprises a depressing member having a linear configuration. The depressing member has several depressing sections. Several touch-control elements are arranged below the depressing sections whereby when a selected depressing section is depressed to activate a corresponding touch-control element, a signal is generated. The keyboard is used in a handheld electronic device such as a mobile phone or a PDA. When the keyboard is used in a mobile phone, the labeling for dialing the phone can be oriented at a direction of 45 degrees so that the user can conveniently dial the phone when he (she) holds the phone horizontally or vertically. At least a depressing section functions in such manner that when the at least a depressing section is depressed and then released, the corresponding touch-control element generates the corresponding signal. When the at least a depressing section is depressed and not released, the at least a depressing section functions as a "shift" or "alt" key of a conventional computer, and it can cooperate with other depressing sections to generate different signal combinations thereby to increase the versatility of the keyboard. Such at least a depressing section is defined as a key-up section, while the other depressing section are key-down sections. When the key-up section is activated alone, it generates a signal representing a symbol the key-up section is normally assigned. When the key-up section and a key-down section are depressed together, the key-up section can function as a "shift" or "alt" key to enable the key-down section to generate a secondary symbol. The handheld electronic device can have a light source, which can selectively illuminate primary or secondary symbols of the keyboard. The multifunction keys can be arranged vertically so that they are in alignment with a longitudinal axis of the handheld electronic device, or slantwise to further increase an interval between two neighboring keys.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Figs. 1 through 3 are photographs of three conventional mobile device/keyboard assemblies.

Fig. 4 is a top plan view of a handheld electronic device with multifunction keys according to the present invention.

Figs. 5, 6 and 7 are perspective views of three types of multifunction key according to the present invention.

Fig. 8 is a perspective view showing an external appearance of a multifunction key according to Fig. 6 of the present invention.

Fig. 9 is a cross-sectional view of another multifunction key according to the present invention.

Fig. 10 is a cross-sectional view of yet another multifunction key according to the present invention.

Fig. 10A is a cross-sectional view of the multifunction key in Fig. 10.

Fig. 11 is a perspective view showing a detail of a panel for receiving the multifunction key shown in Fig. 10.

Fig. 12 is a top view showing a keyboard having a plurality of multifunction keys.

Fig. 13 is a top view showing a handheld electronic device having the keyboard of Fig. 12.

Fig. 14 is a top view showing a variation of the keyboard of Fig. 12 in the key shape and arrangement.

Figs. 15 and 16 are top views showing two further variations of the keyboard of Fig. 12.

Fig. 17 is a front view showing a handheld electronic device having a keyboard according to another preferred embodiment of the present invention.

Figs. 17A and 17B show two different types of symbol arrangement on the keyboard in Fig. 17.

Figs. 18-18B show a variation of the keyboard arrangement with virtual "shift" and "alt" keys to enhance the versatility of the keyboard.

Fig. 19 is a top view showing a PDA phone having multifunction keys also acting as a dialing keypad, wherein the symbols for dialing telephone are tilted so that the PDA phone can be dialed at a portrait or a landscape orientation..

Fig. 19A is a top view showing another PDA phone having a typewriting keyboard consisting of multifunction keys and a dialing keypad wherein the symbols for dialing telephone are tilted so that the PDA phone can be dialed at a portrait or a landscape orientation.

Fig. 20 is a top view showing a handheld electronic device having a keyboard consisting of multifunction keys according to the present invention, wherein the keys are arranged in a tilted manner to increase space between two depressing sections of two neighboring keys.

Figs. 20A and 20B show a handheld electronic device having a multifunction key functioning as a special symbol key and operation of the special symbol key.

Figs. 20C and 20D show a handheld electronic device with a keyboard consisting of multifunction keys and selective illumination to illuminate different layers of symbols of the keyboard.

Fig. 21 is a top view showing a handheld electronic device whose surface panel has a plurality of surface depressions according to the present invention.

Fig. 22 is a top view showing another handheld electronic device whose surface panel has a plurality of linear surface depressions according to the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

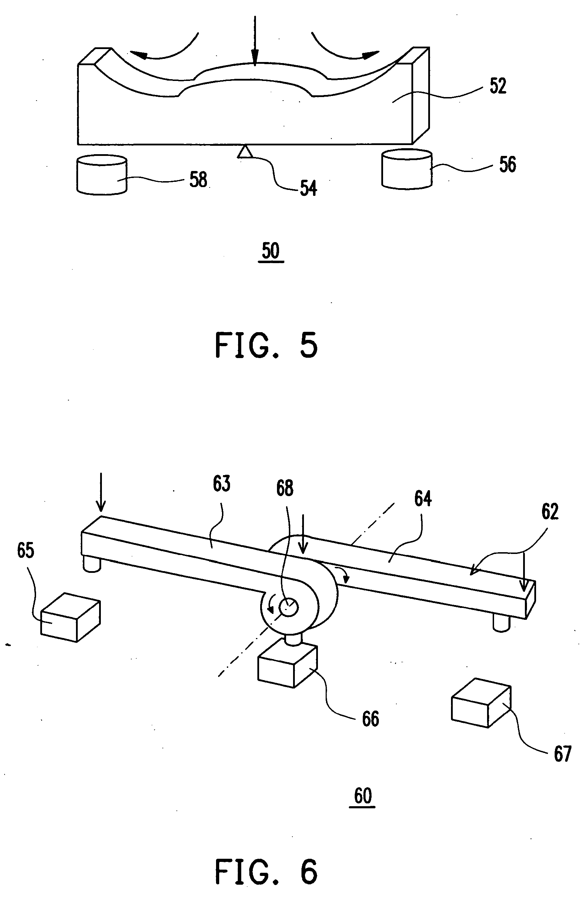

Fig. 4 shows a handheld electronic device 40 incorporating a plurality of multifunction keys 44 in accordance with the present invention. A space between two neighboring multifunction keys is defined as "D2", which is expected to be smaller than the "D1" of the handheld electronic device of Fig. 2 so that the overall width of the handheld electronic device 40 can be reduced. A display 42 is located above the multifunction keys 44. Figs. 5, 6 and 7 are perspective views of three types of structure for implementing the multifunction key according to the present invention. First, as shown in Fig. 5, a multifunction key 50 has a depressing member 52 with a linear profile. The depressing member 52 has three depressing sections (i.e., two side sections and a middle section). The middle section of the depressing member 52 is fixed on a pivot 54. The pivot 54 is supported by an elastic body (not shown) and stationed at a first position. When one side of the depressing member 52 is subjected to a pressure, the depressing member 52 rotates like a lever and makes contact with one of the touch-control elements 56 or 58 to produce a first signal or a second signal. If the middle portion of the depressing member 52 is depressed, the pivot 54 moves from the first position to a second position so that the bottom sections on the sides of the depressing member 52 touch the touch-control elements 56 and 58 simultaneously to produce a third signal. Furthermore, the depressing member 52 remains in the configuration as shown in Fig. 5 when no external forces are applied. Therefore, each multifunction key 50 can be used to input three signals through the three depressing sections of the depressing member 52.

As shown in Fig. 6, a multifunction key 60 has a first lever 63 and a second lever 64 which are hinged together via a hinged section 68 to form a depressing member 62. One end of the first lever 63 can be depressed to contact a first touch-control element 65 and produce a first signal. Similarly, one end of the second lever 64 can be depressed to contact a second touch-control element 67 and produce a second signal. Furthermore, the hinged section 68 of the first lever 63 and the second lever 64 can also be depressed to contact a third touch-control element 66 and produce a third signal. Therefore, each multifunction key 60 can be used to generate three signals through the three depressing sections of the depressing member 62 and the touch-control elements 65, 66, 67.

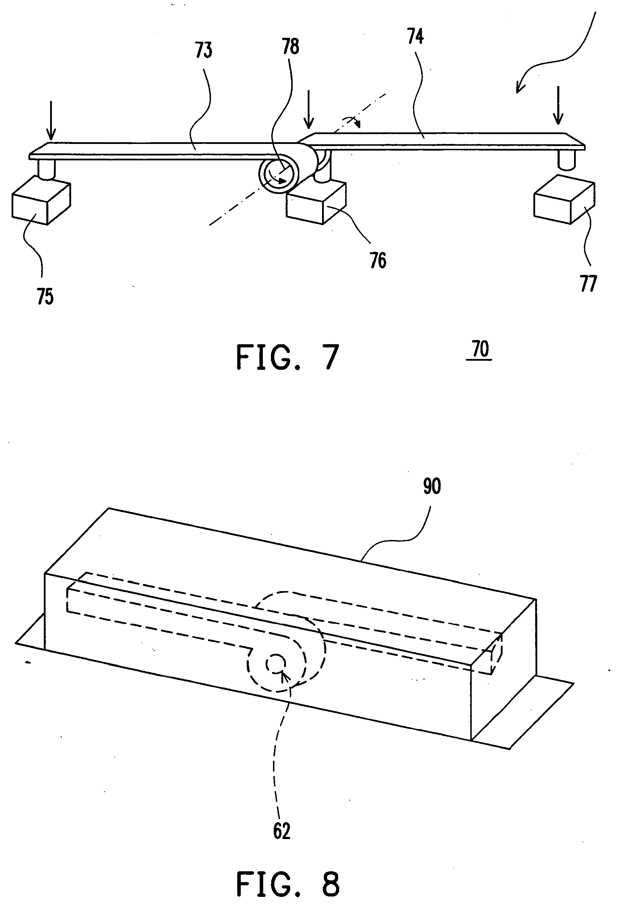

As shown in Fig. 7, a multifunction key 70 is consisted of a depressing member 72 which is made by bending a metal strip to form a first spring plate 73 and a second spring plate 74. One end of the first spring plate 73 can be depressed to contact a first touch-control element 75 and produce a first signal. The second spring plate 74 and the first spring plate 74 are connected at a joint section 78. Similarly, one end of the second plate 74 can be depressed to contact a second touch-control element 77 and produce a second signal. Furthermore, the joint section 78 can be depressed to contact a third touch-control element 76 and produce a third signal. Therefore, the multifunction key 70 can be used to generate three different signals through the three depressing sections of the depressing member 72 and the three touch-control elements 75, 76, 77.

Fig. 8 is a perspective view showing the depressing member 62 of the multifunction key 60 of Fig. 6 is covered with a layer of soft covering material 90, whereby the multifunction key 60 can have an integral appearance and is more conveniently to be manipulated by a user. Furthermore, three symbols can be printed on an upper surface of the covering material 90 near a center and two sides thereof, respectively, to show the symbols that will be generated when the relative parts of the depressing member 62 are depressed.

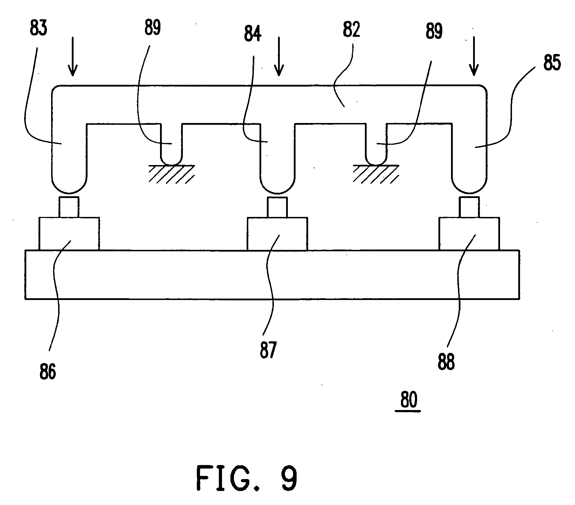

Fig. 9 is a cross-sectional view of a multifunction key 80 according to a further embodiment of the present invention. As shown in Fig. 9, a depressing member 82 of the multifunction key 80 is fabricated by using a soft material. The bottom section of the depressing member 82 has three depressing sections (protruding blocks) 83, 84 and 85 positioned right above three touch-control elements 86, 87 and 88. When a section on the surface of the depressing member 82 that corresponds to one of the depressing section 83, 84 or 85 is subjected to a pressure, the depressing section will contact a corresponding touch-control element 86, 87 or 88 and produce a signal. Furthermore, there is a support pad 89 at the bottom of the depressing member 82 between neighboring depressing sections 83, 84, 85 for preventing the pressure on one particular depressing section from activating a nearby touch-control element. Similarly, the multifunction key 80 can be used to input three different signals through the three depressing sections of the depressing member 82.

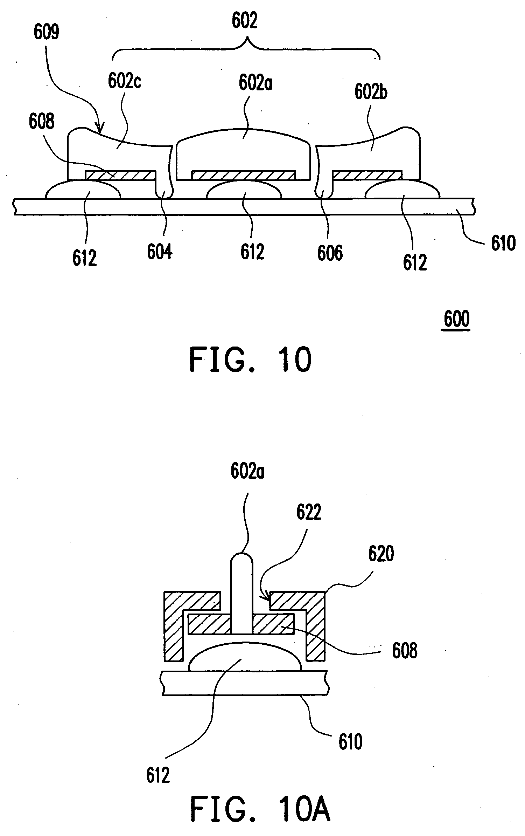

Figs. 10 and 10A are cross-sectional views of yet another multifunction key 600 according to the present invention. Fig. 10A shows that the multifunction key is installed in a panel 620 of a handheld electronic device. The multifunction key 600 has a depressing member 602 which is fabricated by using a soft material and has a linear profile. The depressing member 602 comprises three depressing sections 602a, 602b and 602c. There are bumps 604, 606 at bottoms of the depressing sections 602b and 602c, respectively, located close to the depressing section 602a and in contact with a circuit board 610. The circuit board 610 has a plurality of touch-control elements 612 located under the depressing sections 602a, 602b and 602c for generating three different signals when the depressing sections 602a, 602b and 602c of the depressing member 602 are depressed. By the bumps 604, 606, when the depressing section 602a in the middle of the multifunction key 602 is pressed, the depressing sections 602b and 602c on each side are prevented from being depressed.

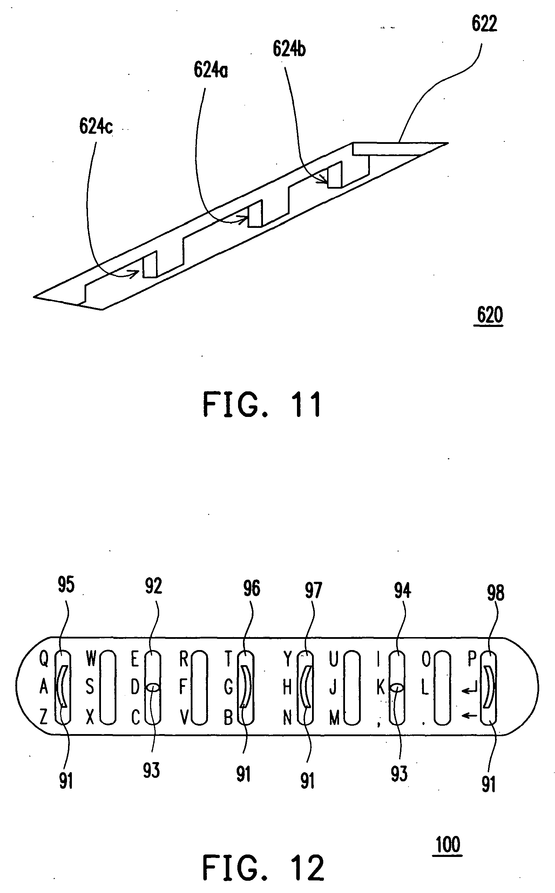

Fig. 11 is a perspective view of the panel 620 for installing the multifunction key 600 shown in Fig. 10. As shown in Figs. 10A and 11, the bottoms of the three depressing sections 602a, 602b, 602c of the depressing member 602 are set up within an opening 622 of the surface panel 620. Only the tops of the three depressing sections 602a, 602b and 602c are exposed above the opening 622 when the multifunction key 600 is mounted in the surface panel 620. In addition, the interior wall beside the opening 622 is formed with three accommodating slots 624a, 624b and 624c, each receiving a tab 608 at a bottom of the three depressing sections 602a, 602b and 602c. By the fitting of the tabs 608 in the slots 624a, 624b, 624c, the depressing member 602 is prevented from being separated from the surface panel 620. Furthermore, the upper surface of the depressing sections 602b and 602c on sides of the multifunction key 602 can be shaped to form a concave surface 609 so that signal input through the finger is facilitated.

Fig. 12 is a top view showing the external appearance of a keyboard 100 according to the present invention. As shown in Fig. 12, the keyboard 100 is consisted of ten multifunction keys, wherein two multifunction keys 92, 94 each have a protruding dot 93 on an upper surface thereof, beside printed symbols D and K. Similarly, four multifunction keys 95, 96, 97, 98 each have a protruding contact marks 91 on an upper surface thereof. The marks 91 each have a shape like a crescent moon. Through a touch of fingers with these protruding dots 93 and marks 91, a user can easily sense the relative position of the fingers on the keyboard 100.

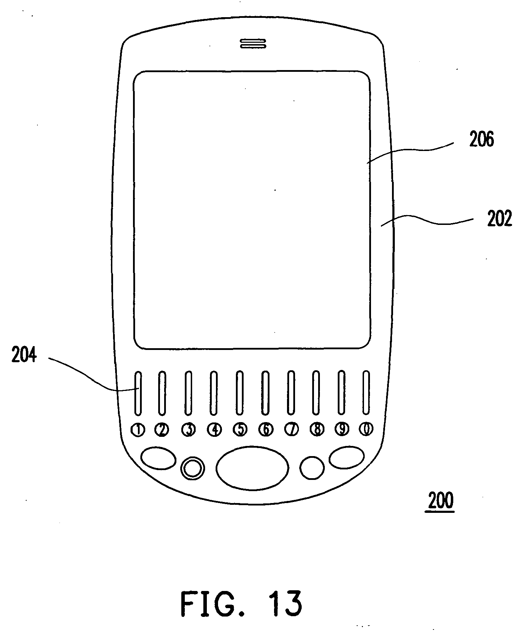

Fig. 13 is a top view showing a handheld electronic device 200 having a keyboard 204 consisted of ten multifunction keys. The multifunction keys are constructed according to one of the preferred embodiments (Figs. 5-10A) of the present invention. The handheld electronic device 200 in Fig. 13 is a personal digital assistant with wireless phone function (PDA phone). The device 200 has a front panel 202, a display screen 206 mounted on an upper portion of the front panel 202 and the keyboard 204 mounted on a lower portion of the front panel 202. The multifunction keys each have a linear configuration, and are arranged vertically parallel to each other. Each multifunction key has three input sections so that it can be manipulated to input at least three different signals.

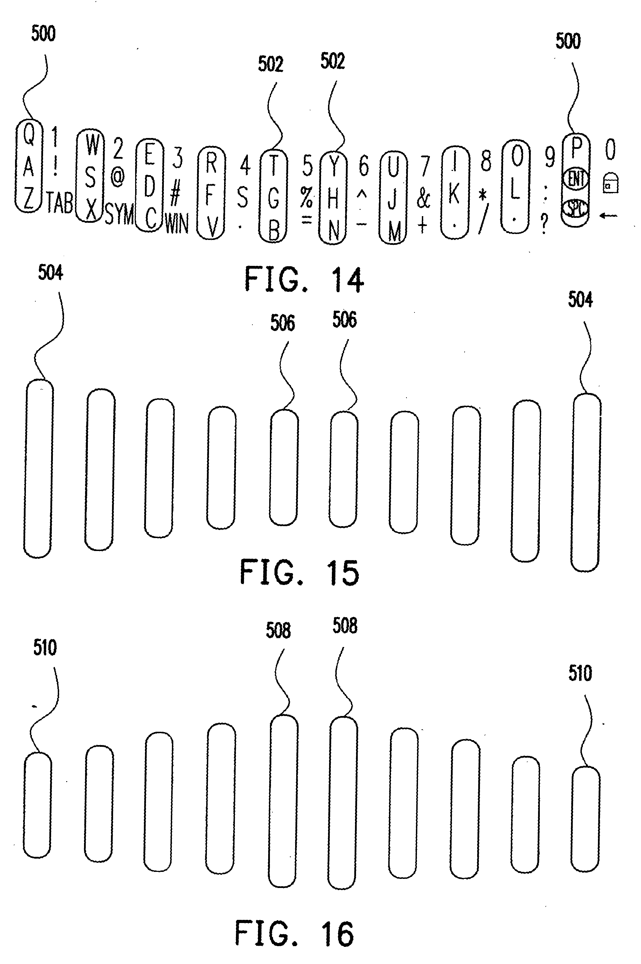

Fig.14 shows an ergonomically designed keyboard with multifunction keys 502 on each lateral side of the keyboard at a level slightly higher than the ones 502 in the middle to form a curve arrangement. In other types of keyboard design, length of the multifunction keys may vary to form an arrangement as shown in Figs. 15 and 16. Figs. 15 and 16 show two different types of key arrangement of the keyboard. In Fig. 15, the multifunction keys 504 on each lateral side of the keyboard have the largest length and the multifunction keys 506 close to the middle of the keyboard have the smallest length. Furthermore, the length of the multifunction keys shortens gradually from both sides towards the center of the keyboard to form a biconcave multifunction key pattern. On the other hand in Fig. 16, the multifunction keys 510 on each lateral side of the keyboard have the smallest length and the multifunction keys 508 close to the middle of the keyboard have the largest length. Furthermore, the length of the multifunction keys lengthens gradually from both sides towards the center of the keyboard to form a biconvex multifunction key pattern.

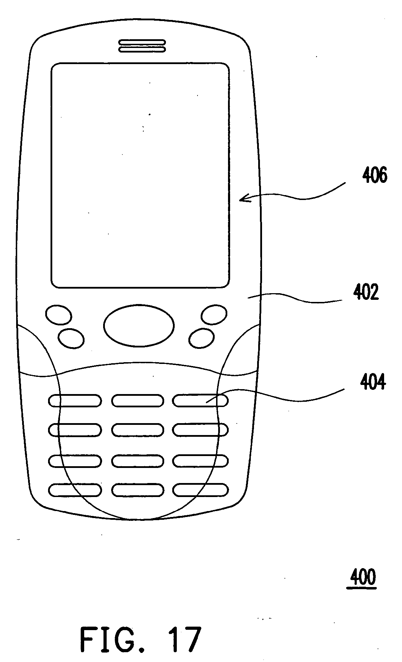

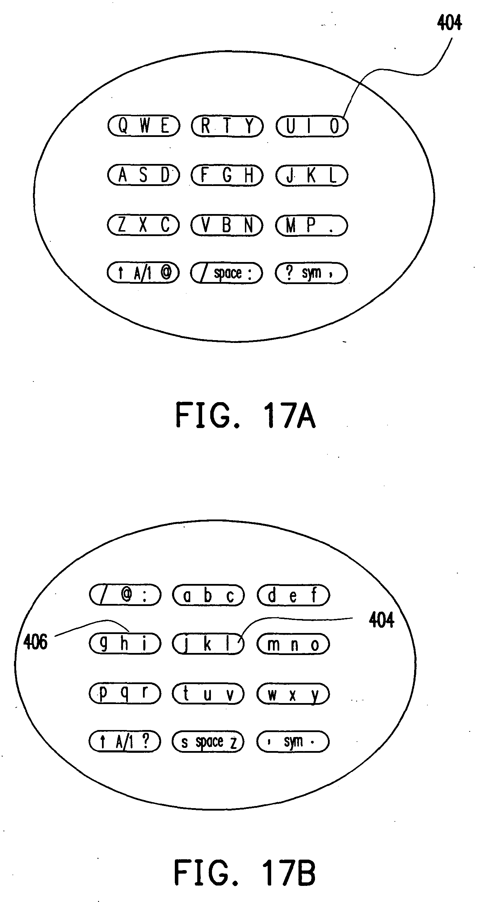

Fig. 17 is a front view showing a handheld electronic device 400 having a keyboard consisted of twelve multifunction keys 404 according to another preferred embodiment of the present invention. The handheld electronic device 400 in Fig. 17 is a mobile phone 400. The multifunction keys 404 each have a linear profile. Altogether twelve multifunction keys 404 are set up on a front panel 402 of the mobile phone 400 in a four-row by three-column array. However, the number of multifunction keys 404 on the keyboard needs not be limited to twelve. The device 400 further has a display screen 406 mounted on the front panel 402 above the keys 404. Each multifunction key 404 can input three signals by depressing the left side, the middle and the right side of the multifunction key 404. Since each multifunction key 404 can input three symbols, the entire keyboard with a total 12 multifunction keys 404 are able to input 36 symbols. Figs. 17A and 17B show two different types of key arrangement on the keyboard in Fig. 17. As shown in Fig. 17A, the multifunction keys 404 on the keyboard according to the present invention may serve as a standard QWERTY keyboard for typewriting. Furthermore, the last row of multifunction keys 404 may include some networking symbols such as [@, /, :, .]. In Fig. 17B, the alphabets are assigned from left to right and top to bottom in alphabetical order with additional common network keys assigned to the first row.

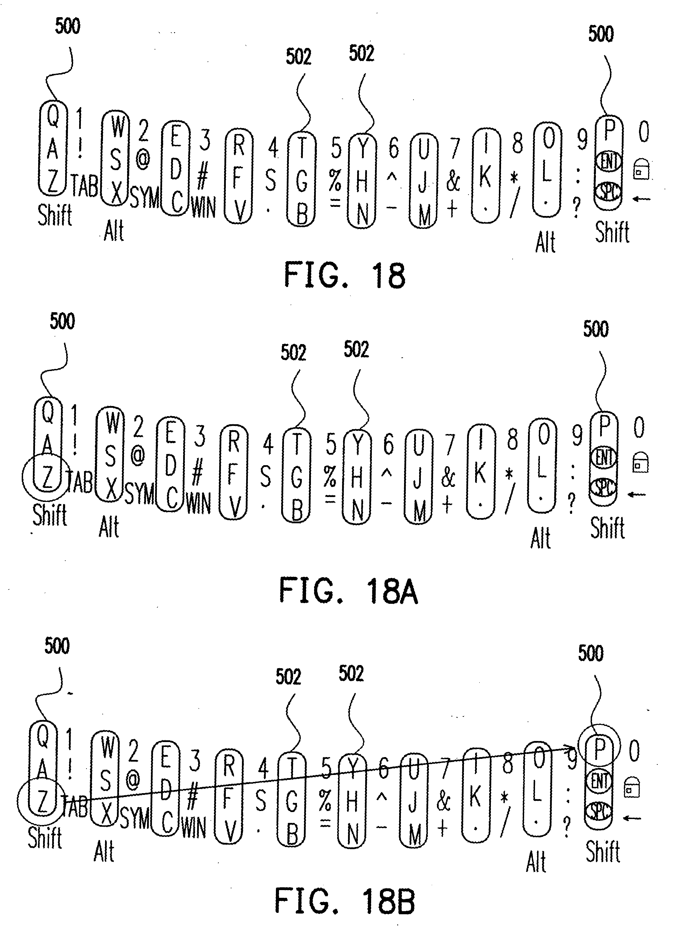

Fig. 18 shows a variation of the keyboard arrangement with virtual keys to enhance the versatility of the keyboard according to the present invention. In this embodiment, symbols are located on different layers. For example, the numeric symbols (0 ~ 9), the computational symbols and the punctuation symbols are labeled on the surface of the front panel beside the multifunction keys 500, 502, which is defined as the first layer. On the other hand, the alphabet symbols, the space key and the enter key are labeled on the upper surface of the multifunction keys 500, 502, which is defined as the second layer. When a user needs to enter any symbols on the second layer, the symbols can be input directly by hitting the top, middle or bottom section of one of the multifunction keys 500, except the lowest keys in the two outermost columns (Z and SPC) and their neighboring keys (X and .). Except the symbols Z, X, . and SPC, the symbols in the second layer are entered using a key-down input mode, which means that no sooner has the key been depressed than a signal is generated. The keys at the bottom of the outermost columns (Z and SPC) and theirs neighbors (X and.) operate in a key-up input mode, which means that only the key is pressed and released, a signal corresponding to Z, SPC, X or . is generated. In other words, holding to depress the key with the symbol Z thereon performs a shift function, and only if the depressing is released the Z symbol is generated. The shift key changes the uppercase/lowercase format of the alphabetic symbols on the second layer. Fig. 18A is a diagram showing an application of the virtual keys on the keyboard in Fig. 18. Fig. 18B is a diagram showing further application of the virtual keys on the keyboard in Fig. 18. As shown in Figs. 18A and 18B, pressing down the Z key without releasing and depressing the P key simultaneously will produce an upper case P. The action of depressing the key Z and then releasing it produces a lowercase z. Depressing the P key along produces a lowercase p. The key Alt is a switch between the first layer and the second layer. For example, pressing down the X key without releasing it and depressing the E key simultaneously produces a 3. Therefore, aside from input the 30 symbols in the second layer, the present invention also permits the input of another 30 symbols in the first layer. In other words, the keyboard of the present invention can produce 60 symbols altogether. Furthermore, the keyboard also provides a key lock function (locking the Shift key and the Alt key) for locking the keyboard to an uppercase letter input mode or a first layer symbol input mode. The Shift key is locked by the action of pressing down the Z key without releasing it and then depressing the ENT key. After locking up the Shift key, all letter input is in uppercase. The lock can be released by repeating the aforementioned locking steps again. The Alt key is locked by the action of pressing down the X key without releasing it and then depressing the ENT key.

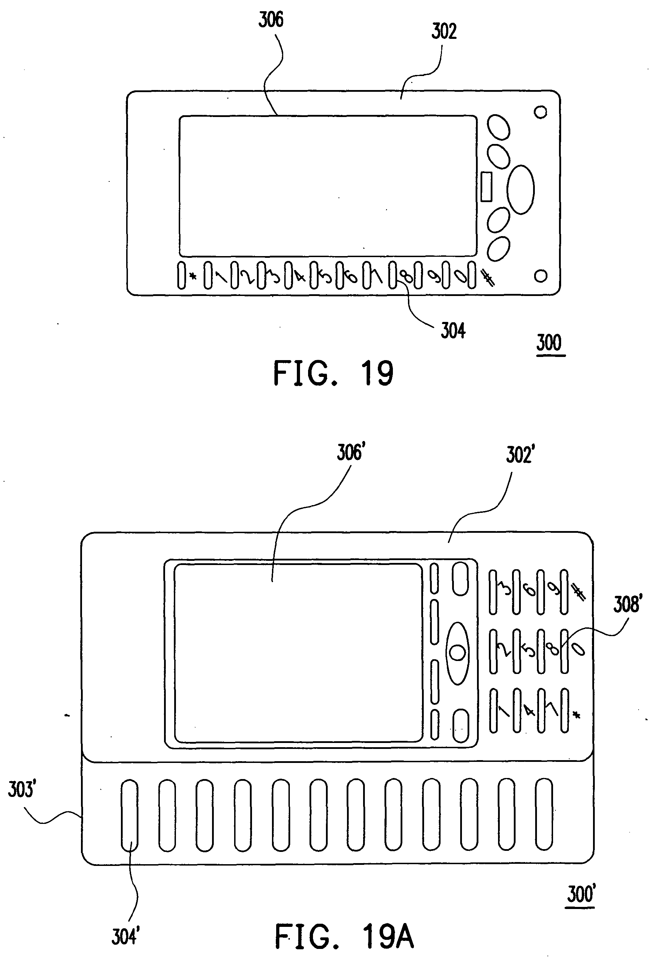

Fig. 19 is a top view showing the keyboard design on a handheld electronic device according to another preferred embodiment of the present invention. In Fig. 19, the application and navigator keys (not labeled) are positioned neighboring a short side of a display screen 306 while the multifunction keys 304 are laid down as a single row below a long side of the display screen 306. Due to the length of the front panel 302, more multifunction keys 304 can be accommodated. For example, a total of 12 multifunction keys in a row is shown in this embodiment. Thus, beside the ten original numeric symbols 0 ~ 9, additional symbols such as * and # can be added to make a total of 12 symbols, which are used for dialing for the PDA phone 300. When the PDA phone 300 is used as a phone, it is vertically positioned (i.e., by rotating the PDA phone 300 in Fig. 19 by 90°). To facilitate reading the symbols in the vertical as well as the horizontal orientations, the numeric symbols (0 ~ 9, * and #) are tilted 45° with respect to the horizontal and vertical axis of the PDA phone 300. The numeric symbols are at the first-layer symbols, while there are symbols on top of the multifunction keys 304 (second-layer symbols) although they are not shown in the drawing.

Fig. 19A is a top view showing the keyboard design on a handheld electronic device according to yet another preferred embodiment of the present invention. In this embodiment, the multifunction keys 304' are positioned on a movable keyboard 303' under the front panel 302' of the handheld electronic device 300'. The movable keyboard 303' can slide out (as shown in Fig. 19A) or slide in and hide beneath the front panel 302'. The handheld electronic device 300' has a display screen 306' and a set of numeric keys 308' beside the display screen 306'. To facilitate reading the numeric keys 308' both in the vertical and the horizontal direction, the numeric symbols (0 ~ 9, * and #) are tilted 45° with respect to the horizontal and vertical axis of the handheld electronic device 300'.

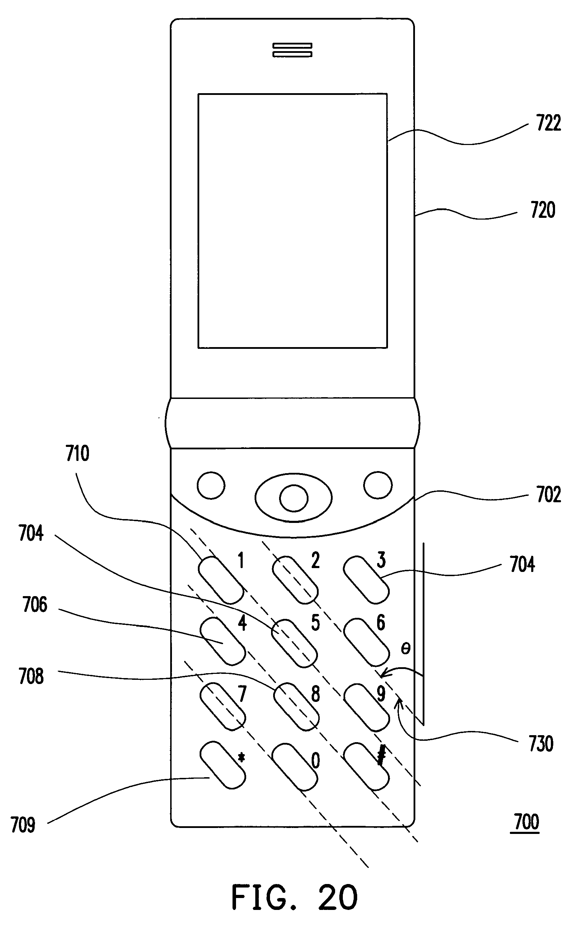

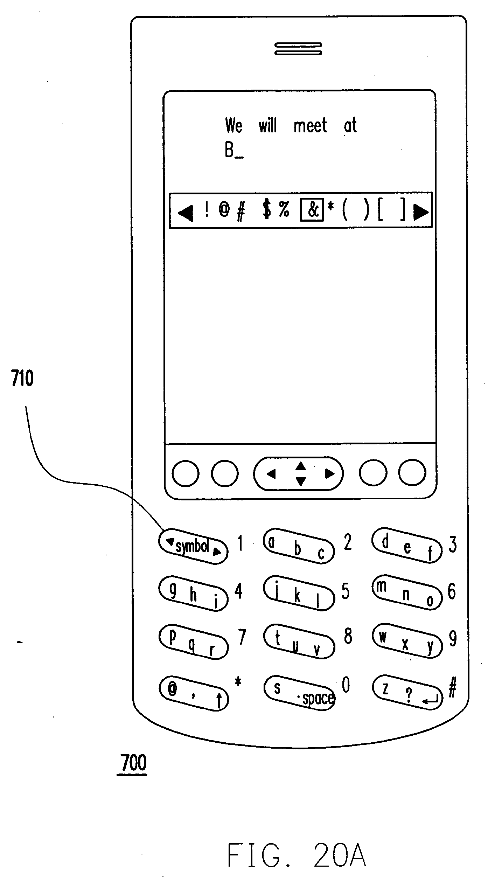

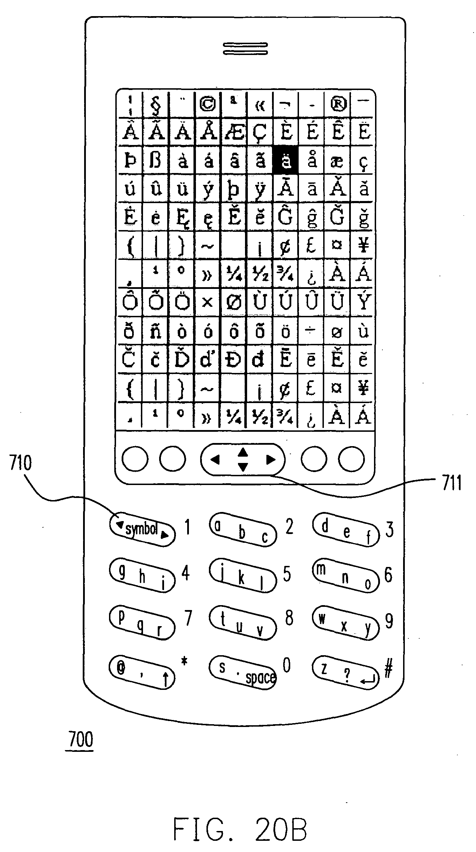

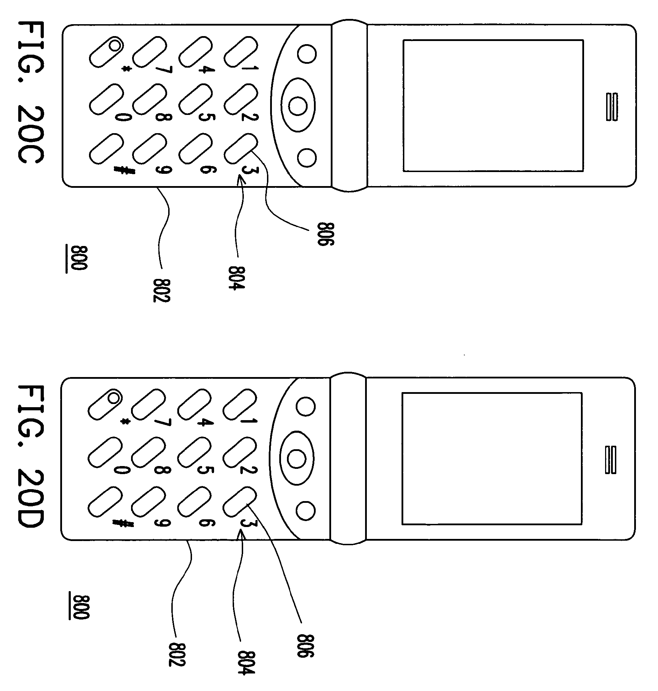

Fig. 20 is a top view showing the keyboard design on a flip-top mobile phone 700 according to one preferred embodiment of the present invention. The flip-top mobile phone 700 is equipped with a display screen 722 on a cover 720. An array of multifunction keys 704, 706, 708 and 710 is set up on the main body 702 of the mobile phone 700. The multifunction keys 704, 706, 708, 710 each have a linear profile. Each multifunction key can input symbols by pressing the middle and the respective sides of the multifunction key. In this embodiment, the long axes of the multifunction keys are parallel to a tilted line 730. The tilted line 730 is set at an angle θ between 40° ~ 50° relative to the vertical direction of the mobile phone 700. With the long axes of neighboring multifunction keys 704, 706 lying neither in the same horizontal line nor the same vertical line, the symbols (for example, the symbols i, j) on adjacent multifunction keys 704, 706 have a greater distance of separation. Hence, depressing the keys on each side of the multifunction keys 704, 706 is more convenient, and the possibility to erroneously depress the keyboard is lowered.

Aside from inputting alphabetic symbols for text message editing, the multifunction keys 704 on the mobile phone 700 can be easily changed to a phone pad mode in which numeric symbols (0-9) and * and # symbols are to be used to operated the phone for dialing a phone number. The multifunction keys includes a letter/number set key, i.e., key 709 at a left, lower corner of the main body 702. The key 709 has a top depressing section, which is labeled a/l. When at the alphabetic mode and the a/1 is depressed, the keyboard is changed to a numeric mode so that a user can depress the middle of a selected multifunction key to enter a required number of 0-9, * or #. Pressing the a/l again, the keyboard is changed back to the alphabetic mode.

Figs. 20A and 20B show a particular application of the multifunction key. As shown in Figs. 20A and 20B, a mobile phone 700 has a multifunction key 710 provided at a left-upper corner of the keyboard, which is labeled with a "symbol" and two oppositely pointed arrows. The key is used for input special symbols, like Greek alphabets, punctuation marks, unit marks and so on (for example, ! @ # $ % ^ & ( ) [ ] { } < > ...). These special symbols can be reached by depressing the leftward-upward arrow to search a desired symbol in a backward direction of sequence (Fig. 20A), the rightward-downward arrow to search a desired symbol in a forward direction of sequence (Fig. 20A), or the "symbol" to shown the entire symbol table on the screen (Fig. 20B). When depressing the "symbol" to show the symbol table, a user needs to further manipulate a navigator 711 to locate the desired symbol.

Figs. 20C and 20D show a mobile phone 800 like that shown in Fig. 20. The phone 800 is a flip-cover phone having a main body 802. The main body 802 has a front panel 804, and a plurality of multifunction keys 806 is mounted on the front panel 804. However, in the mobile phone 800 of Figs. 20C and 20D, an extra function is added to facilitate the operation of the phone. The added function is a selective illumination. The selective illumination means that there is a light source in the main body. The light source can be selected to illuminate the first layer symbols (i.e., the numeric symbols 0-9 and * and #)(Fig. 20C), or the second layer symbols (i.e., the alphabets and other symbols on top of the multifunction keys 806) (Fig. 20D). The selective illumination can be achieved by transmitting light for a light source through a selected one of two light pipes to light the symbols of a selected one of the first and second layers.

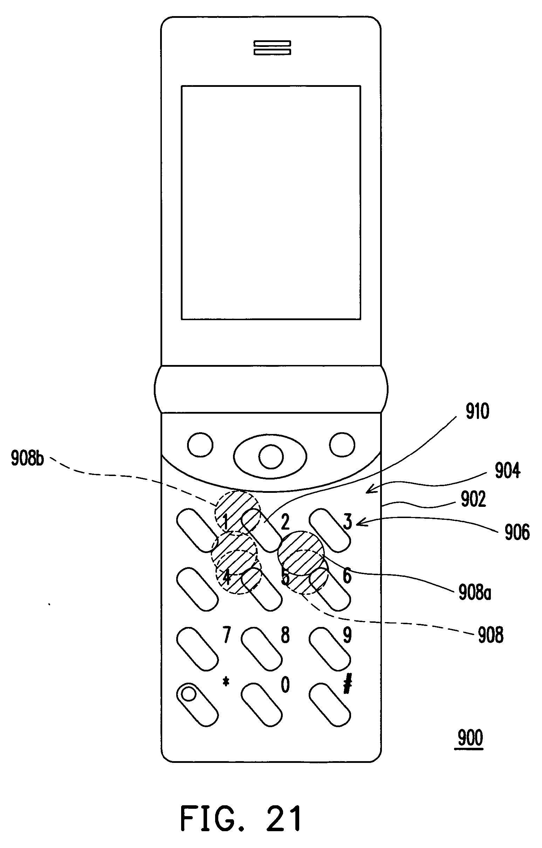

Fig. 21 is a top view showing a handheld electronic device 900 whose surface panel 904 has a plurality of surface depressions 908, 908a, 908b according to the present invention. The handheld electronic device 900 shown in Fig. 21 is a flip-top mobile phone. The phone 900 includes a main body 902 with the surface panel 904. A plurality of openings 906 is defined in the surface panel 904 for accommodating a plurality of multifunction keys 910. The surface depressions 908, 908a, 908b each have a circular configuration, and arranged in two columns between the multifunction keys 910 which are arranged in three columns. The depressions extend to the areas occupied by sides of the multifunction keys 910, whereby the sides of the multifunction keys 910 can be more easily depressed by the user.

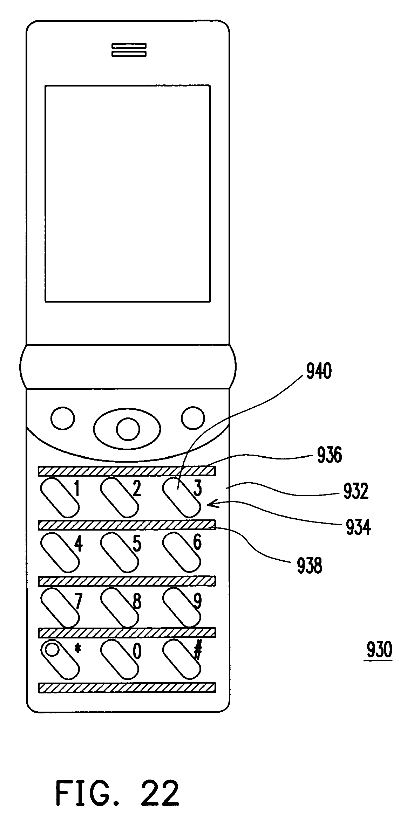

Fig. 22 is a top view showing a handheld electronic device 930 whose surface panel 934 has a plurality of linear surface depressions 936, 938 according to the present invention. The handheld electronic device 930 is a flip-top mobile phone having a main body 932. The surface panel 934 is formed on the main body 932. The surface depressions 936, 938 are arranged in a plurality of horizontal rows above, below and between the multifunction keys 940 which are arranged in four rows. The depressions extend through areas occupied by sides of the multifunction keys 940 so that the sides of the multifunction keys 940 can be more easily depressed by the user.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A handheld electronic device, comprising:
a display screen;
a plurality of multifunction keys for inputting letters, numbers and symbols to be displayed on the display screen, wherein each multifunction key has a linear configuration and a plurality of depressing sections therealong, each depressing section representing a predetermined input to the handheld electronic device; and
a plurality of touch-control elements located underneath the depressing sections, wherein when one of the depressing sections is depressed at least one of the touch-control elements is activated to input a signal to the handheld electronic device.

2. The handheld electronic device of claim 1, wherein neighboring multifunction keys are parallel to each other.

3. The handheld electronic device of claim 1, wherein the device has a front panel with a plurality of openings therein, the multifunction keys are accommodated in the openings, respectively, the front panel further having a plurality of depressions each around an end of one of the openings such that one end of each of the multifunction keys is adjacent to a corresponding depression.

4. The handheld electronic device of claim 1, wherein the device further comprises a front panel with a plurality of openings therein, the multifunction keys are accommodated in the openings, the front panel further comprising a plurality of linear surface depressions extending parallel to each other and around ends of the openings.

5. The handheld electronic device of claim 1, wherein each multifunction key comprises a cover made of soft material.

6. The handheld electronic device of claim 1, wherein each multifunction key comprises a lever with two ends and a mid-section serving as the depressing sections, a first signal or a second signal is produced when one or the ends of the lever is depressed to contact its corresponding touch-control element, and a third signal is produced when the middle section of the lever is depressed so that the ends of the lever contact both touch-control elements simultaneously.

7. The handheld electronic device of claim 1, wherein each multifunction key comprises:
a first lever, wherein one end of the first lever can be depressed to contact with a touch-control element and produce a first signal; and
a second lever hinged to the first lever, wherein one end of the second lever can be depressed to contact with another touch-control element and produce a second signal, and the hinged section that joins the first and the second lever together can be depressed to contact yet another touch-control element and produce a third signal.

8. The handheld electronic device of claim 1, wherein each multifunction key comprises:
a first spring plate, wherein one end of the first spring plate can be depressed to contact with a touch-control element and produce a first signal; and
a second spring plate connected to the first spring plate through a connection section, wherein one end of the second spring plate can be depressed to contact with another touch-control element and produce a second signal, and the connection section can be depressed to contact yet another touch-control element and produce a third signal.

9. The handheld electronic device of claim 1, wherein each multifunction key is made of elastic material and has a plurality of protruding blocks at a bottom thereof serving as the depressing sections for making contact with the touch-control elements and producing corresponding signals.

10. The handheld electronic device of claim 9, wherein the bottom of each multifunction key further comprises a plurality of support pads positioned between the protruding blocks.

11. The handheld electronic device of claim 1, wherein each multifunction key is made of elastic material and has a plurality of bumps at a bottom thereof, the bumps being positioned between the depressing sections.

12. The handheld electronic device of claim 1 further comprising an internal light source for selectively illuminating different symbols of the multifunction keys.

13. The handheld electronic device of claim 1, wherein the multifunction keys are set up on the electronic device with their long axes oriented along a tilted direction of the device so that the operating space between adjacent keys is increased.

14. The handheld electronic device of claim 1, wherein the multifunction keys are grouped together to form a standard QWERTY typewriting keyboard.

15. A standard QWERTY typewriting keyboard, comprising:
a flat panel;
a plurality of multifunction keys mounted on the flat panel, each multifunction key having:
a depressing member with a linear profile and several depressing sections arranged on a bottom of the depressing member; and
a plurality of touch-control elements lying underneath the respective depressing sections such that each depressing member can be depressed to contact at least a touch-control element and produce a signal, wherein one of the multifunction keys comprises a key-up key, when the key-up key is depressed without releasing and another key is depressed simultaneously, a signal generated by the another key is different from that generated by depressing the another key alone, whereby the key-up key serves to enhance the versatility of the keyboard.

16. The standard typewriting keyboard of claim 15, wherein depressing surfaces of some of the multifunction keys has a protruding dot or a protruding curve mark that provides some feedback to a user about the current position of the user's fingers on the keyboard through touch, instead of looking at the keyboard.

17. The standard typewriting keyboard of claim 15, wherein when the key-up key is depressed without releasing, the key-up key functions as a "shift" key, and the "shift" function can be locked.

18. The standard typewriting keyboard of claim 17, wherein each multifunction key has a corresponding numeric symbol laid down at 45° with respect to the horizontal and the vertical direction of the keyboard so that a user can input the number in both the horizontal and the vertical direction with ease.

19. A handheld electronic device, comprising:
a display screen;
a flat panel, and
a keyboard set up on the flat panel for inputting data to be displayed on the display screen, wherein the keyboard has a plurality of multifunction keys each having a linear profile and a plurality of depressing sections for inputting different signals, and the multifunction keys are laid down with their long axes aligned with tilted parallel lines.

20. The handheld electronic device of claim 19, wherein the keyboard further comprises an internal light source for providing illumination to selectively illuminate different symbols of the multifunction keys.
